# EUROPÄISCHE PATENTANMELDUNG

(11) **EP 0 756 989 A2**
(43) Veröffentlichungstag der Anmeldung: **05.02.1997**
(21) Anmeldenummer: 96110677.0
(22) Anmeldetag: 02.07.1996
(51) Int. Cl.: B62M 1/02, B62M 11/02, B62M 9/02

(54) **Fahrradantrieb**

(30) Priorität: 04.07.1995 DE 19524341
(71) Anmelder: Poier, Hermann, 65824 Schwalbach (DE)
(72) Erfinder: Poier, Bruno, 61231 Bad Nauheim (DE)

(57) **Zusammenfassung**

Die Erfindung betrifft einen Antrieb für zwei- und dreirädige Fahrzeuge, die vorzugsweise durch Muskelkraft über eine Drehbewegung mittels Ketten auf das Antriebsrad, z.B. Fahrrad, betätigt wird.

Es ist Aufgabe der Erfindung, hier eine wesentliche Erleichterung durch Verbessrung des Wirkungsgrades zu schaffen, und das Fahren gegen hohen Widerstand zu erleichtern.

Diese Aufgabe wird erfindungsgemäß dadurch gelöst, daß die Kurbelarme getrennt geführt, aber schlüssig über ein Tretlagergetriebe so miteinander verbunden sind, daß sich für die rücklaufende Pedale eine größere Winkelgeschwindigkeit ergibt, als für die vorlaufende, kraftbeaufschlagte Pedale.

Durch diese Maßnahme durcheilt nur die rücklaufende Pedale die Todzonen und die mit schlechtem Wirkungsgrad behafteten Sektoren. Die Pedale gelangt somit schnell wieder in die Hauptantriebswinkelzone, und zwar zu einem Zeitpunkt, in der die bisher treibende Pedale gerade diese Hauptantriebswinkelzone verläßt.

Dieser Fahrradantrieb besteht aus dem Tretlager und dem Blindwellengetriebe.

Der Getriebekasten ist im Fahrradrahmen drehbar gelagert.

Zwischen dem Getriebe ist die Kupplungseinheit montiert.
Ein Motor (Pos. 601), (ähnlich Akuschrauber mit Links- und Rechtslauf ist am Getriebekasten befestigt.

## Beschreibung

Die Erfindung betrifft einen Antrieb für zwei- und dreirädige Fahrzeuge, die vorzugsweise durch Muskelkraft über eine Drehbewegung mittels Ketten auf das Antriebsrad, z.B. Fahrrad, betätigt wird.

Dem Anmelder bekannter, bisheriger Stand der Technik:
Gebrauchsmuster / Deutsches Patentamt
Rollennummer: G 88 13 780.S
Hauptklasse: B 62 M 11/02

Vorteile dieses Tretlagergetriebes gegenüber bekannten Tretkurbelgetrieben ist sein einfacher Aufbau, leichte Montage und Demontage.

Es ist Aufgabe der Erfindung, hier eine wesentliche Erleichterung durch Verbesserung des Wirkungsgrades zu schaffen, und das Fahren gegen hohen Widerstand zu erleichtern.

Diese Aufgabe wird erfindungsgemäß dadurch gelöst, daß die Kurbelarme getrennt geführt, aber schlüssig über ein Tretlagergetriebe so miteinander verbunden sind, daß sich für die rücklaufende Pedale eine größere Winkelgeschwindigkeit ergibt, als für die vorlaufende, kraftbeaufschlagte Pedale.

Durch diese Maßnahme durcheilt nur die rücklaufende Pedale die Todzonen und die mit schlechtem Wirkungsgrad behafteten Sektoren. Die Pedale gelangt somit schnell wieder in die Hauptantriebswinkelzone, und zwar zu einem Zeitpunkt, in der die bisher treibende Pedale gerade diese Hauptantriebswinkelzone verläßt.

Durch diese Eigenschaft wird ein verlustarmer, pausenloser mit größtmöglichem Drehmoment versehbarer Energiefluß zum treibenden Antriebsrad möglich. Dieser konstante Energiefluß verhindert ein Zurückfallen der Fahrgeschwindigkeit, und erspart so dem Fahrer ein zweimaliges, kraftraubendes Beschleunigen während eines Pedalumlaufes.

Ausgehend von der Tatsache, daß das erreichbar möglichst große Drehmoment der Pedale im vorderen Winkelbereich etwa von 30 - 150 Winkelgrad durch annähernd senkrechten Druck umgesetzt werden kann, und daß bei zwei fest miteinander um 180 Winkelgrad versetzten Pedalen dadurch Todwinkelbereiche entstehen, wäre eine Anbringung von drei Pedalen jeweils um 120 Grad versetzt angeordnet nahezu ideal.

Mit dieser theoretischen Lösung würde dann keine Unterbrechung des Kraftflusses mehr auftreten.

### Fahrradantrieb

Dieser Fahrradantrieb besteht aus dem Tretlager und dem Blindwellengetriebe.

Dieser Fahrradantrieb ist eine Weiterentwicklung der Patentanmeldungen:

| | |
|---|---|
| Tretlagergetriebe | P 43 45 008.3 |
| Blindwellengetriebe | 195 24 341.2 |
| (beide Deutsches Patentamt) | |
| Tretlagergetriebe | 94 120 913.2 |
| (Europäisches Patentamt) | |

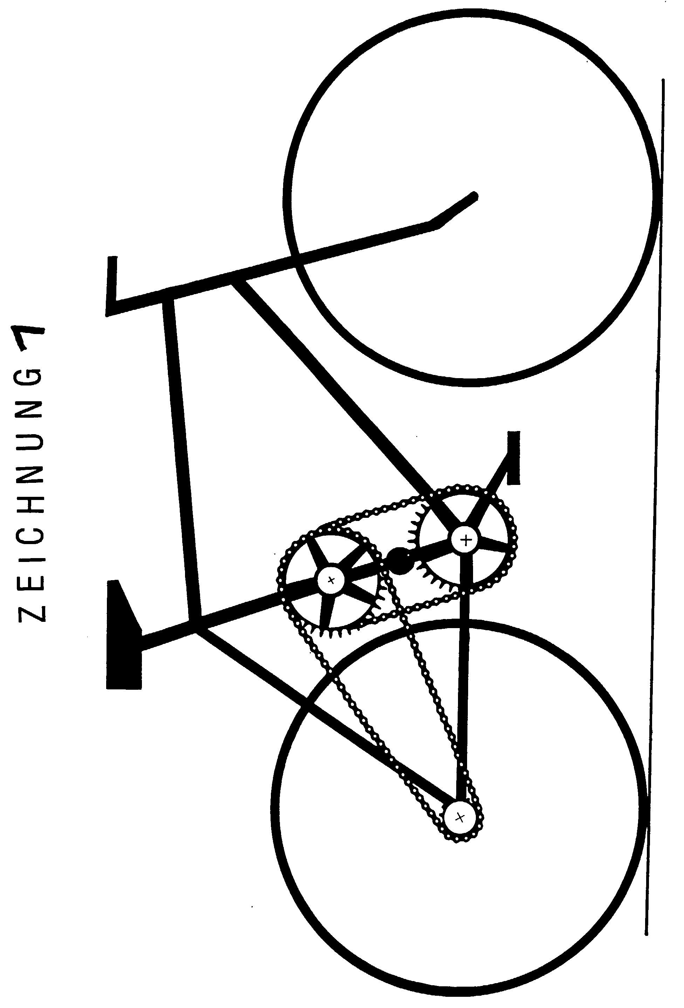

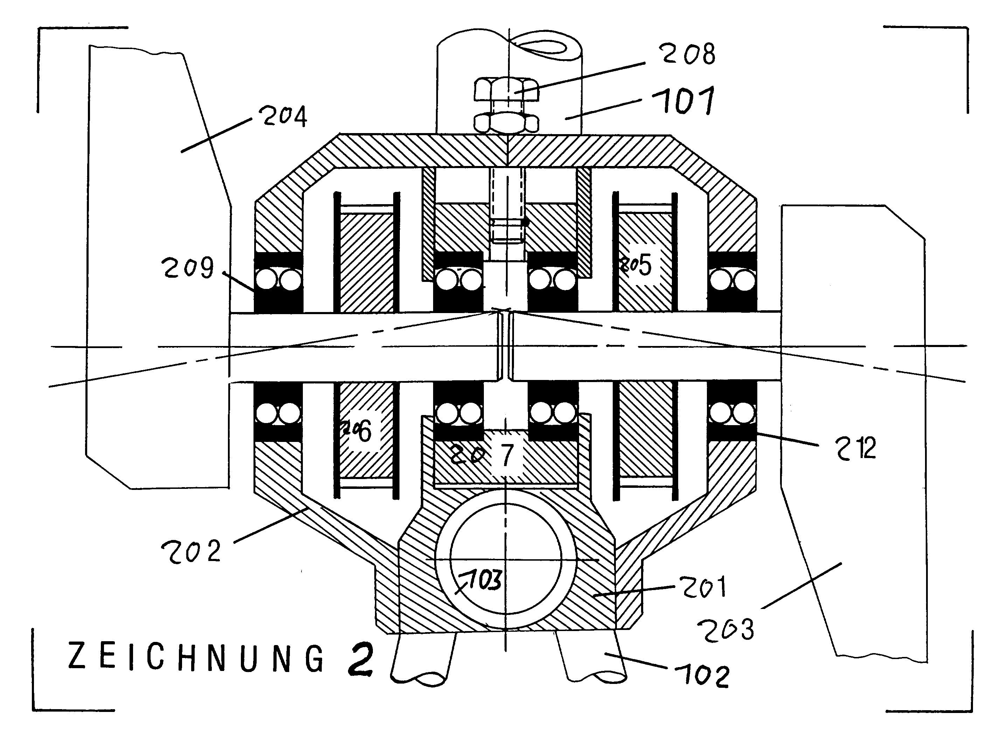

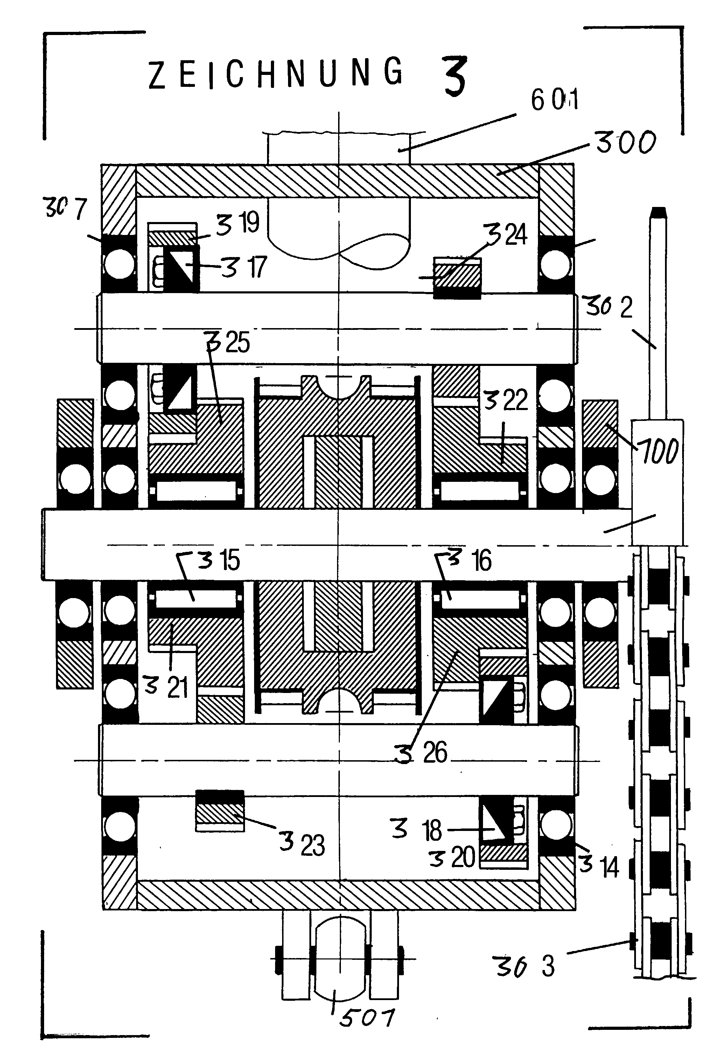

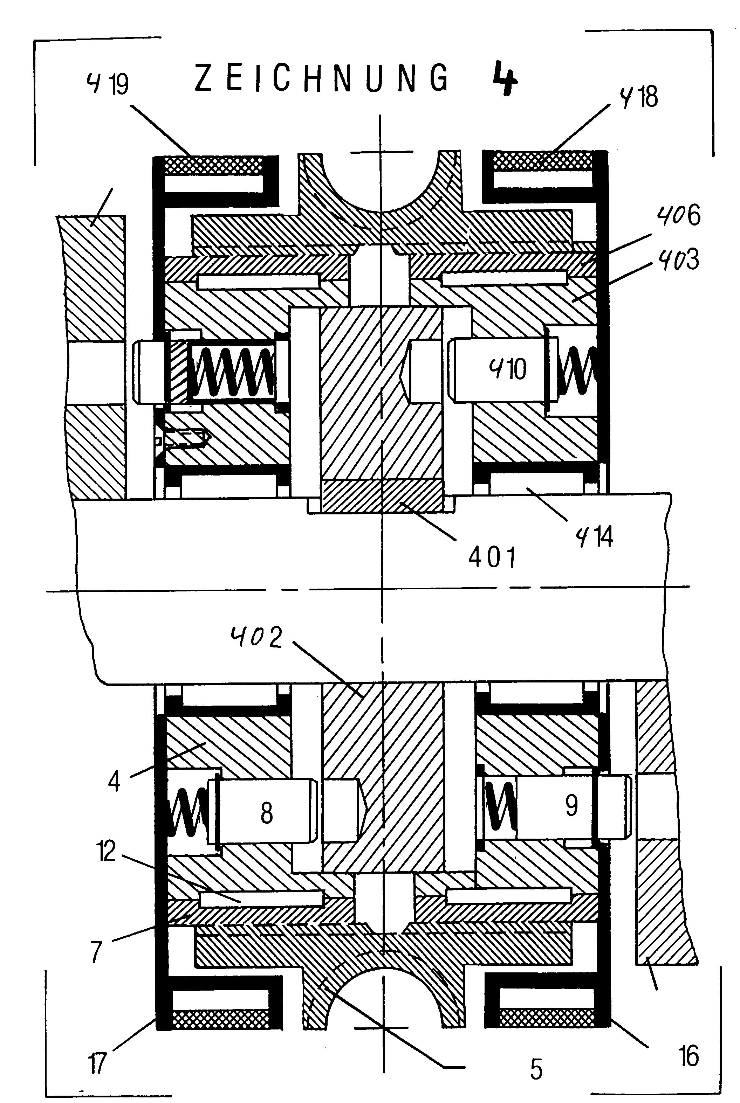

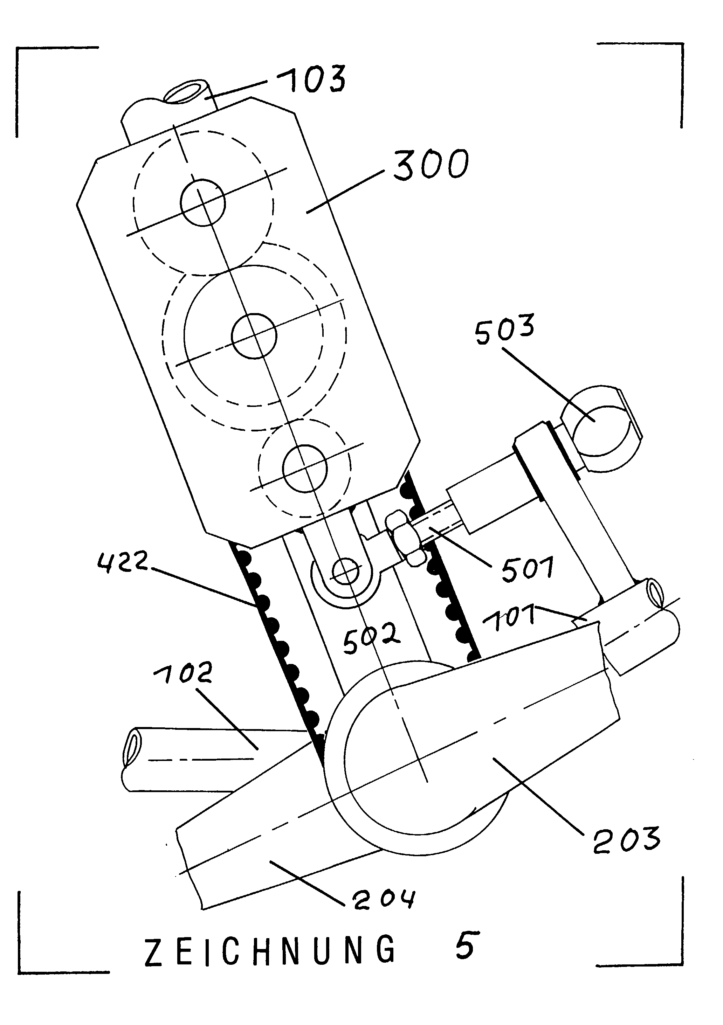

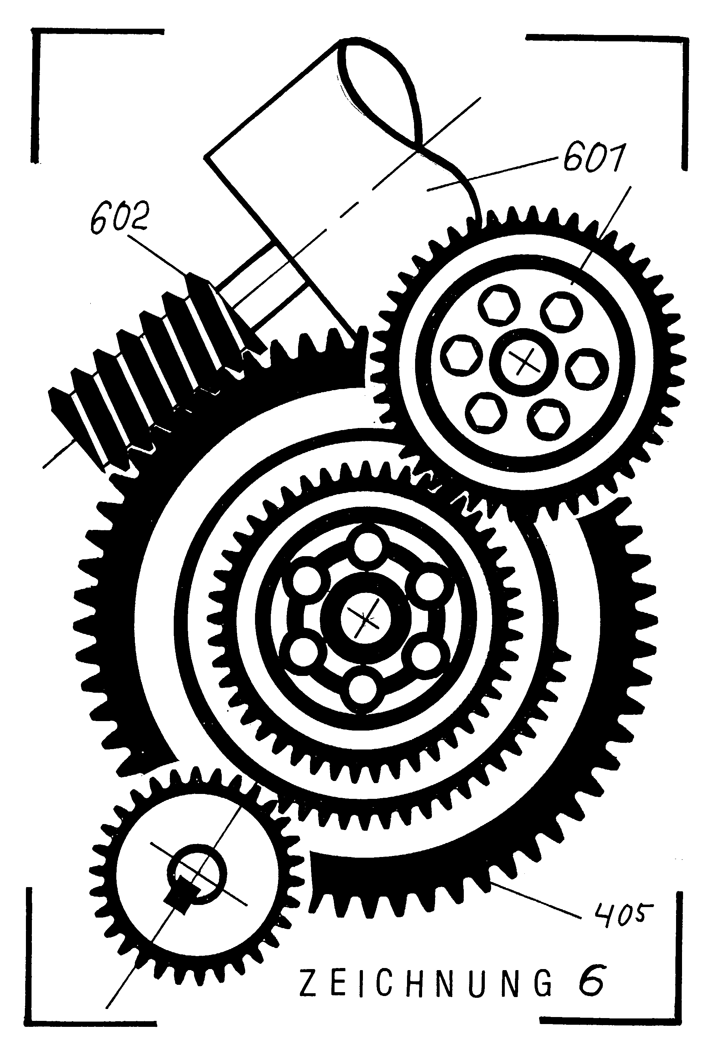

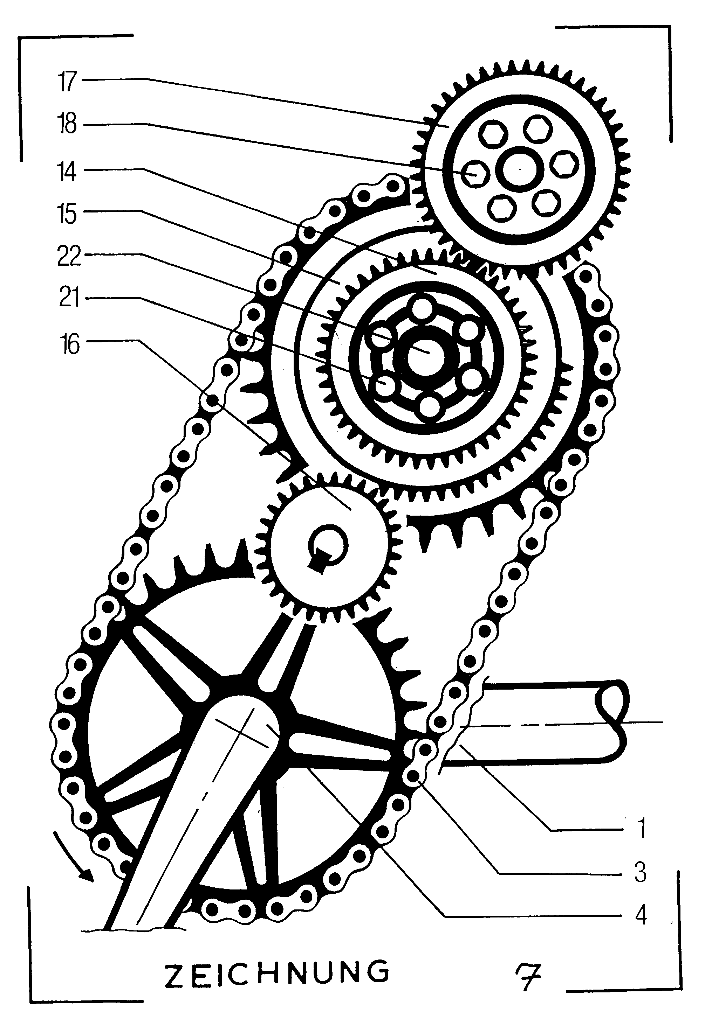

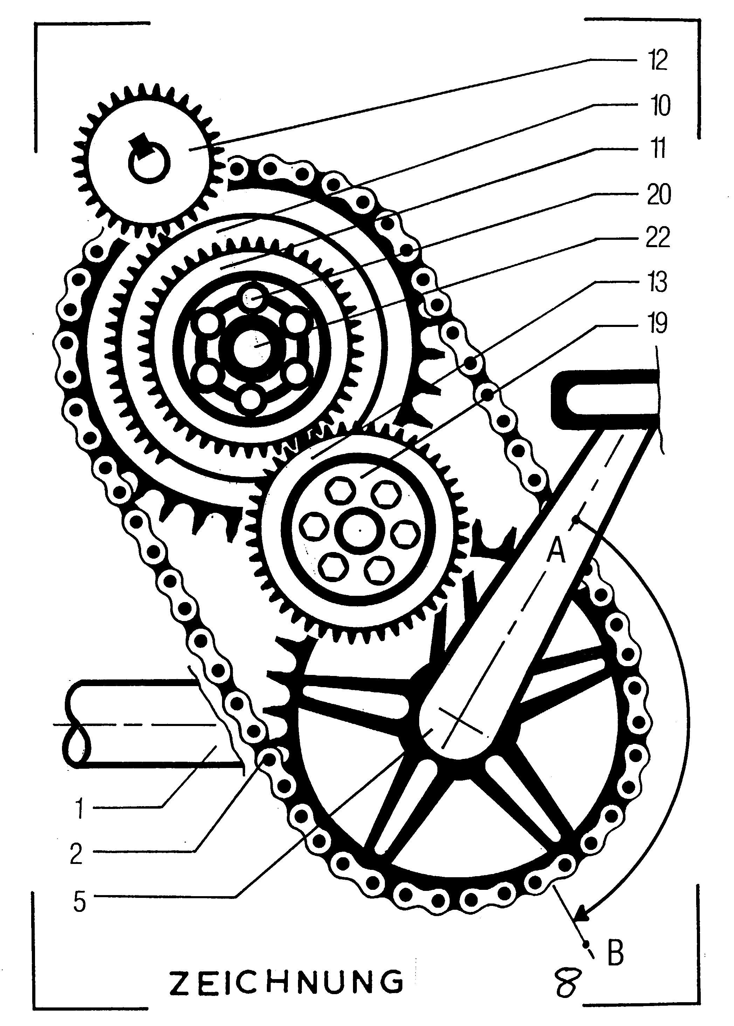

### Tretlager (Pos. 200) Zeichnung 2

Die Kurbelarme (Antriebshebel) sind getrennt geführt und jeweils in zwei Pendelkugellager gelagert.
Antriebshebel, Welle (Achse) und Zahnriemenscheibe sind fest miteinander verbunden. Über zwei Zahnriemen wird die Kraft vom Tretlager zur Blindwelle übertragen.

Beide Achsen (Wellen) stehen in einer Flucht. Durch eine Verstellmöglichkeit durch eine Schraube, die das Lagergehäuse (Pos. 207) in Fahrtrichtung nach vorne zieht, verändert sich der Winkel der Wellen zum Fahrradrahmen.
Jetzt bewegen sich die Pedale nicht mehr parallel, sondern gehen in Fahrtrichtung voneinander weg. Der Vorteil:

Die Kniegelenke werden geschont.

Jede Person kann sich das Tretlager so einstellen, wie sie am besten fährt.

Ein weiterer Vorteil ist,
hat das Fahrrad einen Kindersitz hinter dem Lenker, hat man durch die Verstellung der

Pedale mehr Beinfreiheit.

### Getriebekasten (Pos. 300)

Der Getriebekasten ist im Fahrradrahmen drehbar gelagert.

Im Getriebekasten sind eine Blindwelle mit Klingenfreilauf und Kettenblatt sowie zwei Achsen gelagert.

Auf den Wellen ist ein Getriebe mit acht Zahnrädern montiert.

Das Zahnradgetriebe ist beschrieben
EP 94 120913.2
DP 195 24 341.2
(liegt als Beilage bei)

Zwischen dem Getriebe ist die Kupplungseinheit montiert.
Ein Motor (Pos. 601), (ähnlich Akuschrauber mit Links- und Rechtslauf ist am Getriebekasten befestigt.

### Kupplung (Pos. 400)

In der Beschreibung der Patentanmeldung _{ʺ}Blindwellengetriebeʺ (Deutsches Patentamt 195 24 341.2) ist ein nicht umschaltbares Getriebe beschrieben. Um das Zahnradgetriebe auszuschalten und auf eine herkömmliche Fahrweise der Pedalkurbeln umzuschalten, bedarf es einer Kupplung.

Auf der Blindwelle (Antriebsachse Pos. 301) ist eine Mitnehmerscheibe durch eine Paßfeder fest verbunden. Kupplungsscheibe rechts und links sind durch Wälzlager gelagert, lassen aber auch eine lineare Verschiebung zu. Die rechte Zahnriemenscheibe ist mit der Kupplungsscheibe rechts durch Schrauben verbunden. Die linke Zahnriemenscheibe ist mit der linken Kupplungsscheibe durch Schrauben verbunden.
Angetrieben werden die Zahnriemenscheiben durch zwei Zahnriemen, die die Bewegung der zwei Zahnriemenscheiben vom Tretlager auf die Blindwelle übertragen

Ein Getriebering (Pos. 405) hat außen ein Schneckenradsatz. Auf der Innenseite besitzt es ein Rechts- und ein Linksgewinde. Die Schnecke wird durch einen Motor mit umschaltbarem Rechts- und Linkslauf in Bewegung gebracht.
Es geschieht nun folgendes:
Je nach Richtung, wie der Getriebering sich dreht, laufen die zwei Gewinderinge zentrisch zueinander oder auseinander, und nehmen die Kupplungsscheiben über Nadellager mit.
Die Kupplungsbolzen sind gefedert. Stimmen die Positionen, so rasten sie in die Bohrungen in der Mitnehmerscheibe bzw. In die Zahnräder des Getriebes ein. Beim Umschalten vom Getriebe zur herkömmlichen Fahrweise und zurück kommt es kurz zu einer Kraftlösung zwischen Pedal und Blindwelle. Es sollte deshalb bei Stillstand des Fahrrades umgeschaltet werden.

Beim Fahren mit eingeschaltetem Getriebe läßt sich der Punkt bei der Pedalumdrehung in der 120 Grad Kraftfase durch Nabenverbindungen individuell einstellen. Ideal wäre von 60 Grad oberhalb der horizontalen Mittelachse des Tretlages. Fährt man jetzt aber eine Strecke von 30 Grad, bekommt man durch die Schräglage des Fahrrades automatisch wieder einen oberen Totpunkt.

Deshalb ist der Getriebekasten pendelnd gelagert und man kann über eine Stellschraube (Pos. 501) festgestellt werden. Man kann so damit den Punkt der Kraftfase von 120 Grad neu und schnell einstellen.

| | |
|---|---|
| Pos. 100 | Fahrradrahmen |
| 101 | unteres Rahmenrohr |
| 102 | Hintergabelrohre |
| 103 | Sitzrohr |
| | |
| Pos. 200 | Tretlager |
| 201 | Flansch |
| 202 | Tretlagergehäuse |
| 203 | Antriebshebel (Kurbelarm) rechts mit Welle (Achse) |
| 204 | Antriebshebel (Kurbelarm) links mit Welle (Achse) |
| 205 | Zahnriemenscheibe rechts |
| 206 | Zahnriemenscheibe links |
| 207 | Lagergehäuse |
| 208 | Stellschraube |
| 209 - | |
| 212 | Pendelkugellager |
| | |
| Pos. 300 | Getriebekasten |
| 301 | Antriebsachse (Blindwelle) |
| 302 | Kettenblatt |
| 303 | Antriebskette |
| 304 | Klingenfreilauf |
| 305 | Achse |
| 306 | Achse |
| 307- | |
| 314 | Wälzlager (Kugellager) |
| 315 | Wälzlager (Nadellager) |
| 316 | Wälzlager (Nadellager) |
| 317 | Nabenverbindung |
| 318 | Nabenverbindung |
| 319- | |
| 326 | Zahnräder |

### Kupplung (Pos. 400)

| | |
|---|---|
| Pos. 401 | Paßfeder |
| 402 | Mitnehmerscheibe |
| 403 | Kupplungsscheibe rechts |
| 404 | Kupplungsscheibe links |
| 405 | Getriebering |
| 406 | Gewindering rechts mit Linksgewinde |
| 407 | Gewindering links mit Rechtsgewinde |
| 408 - | |
| 411 | Kupplungsbolzen |
| 412 - | |
| 415 | Nadellager (Rollenlager) |
| 416 | Zahnriemenscheibe rechts |
| 417 | Zahnriemenscheibe links |
| 418 | Zahnriemen rechts |
| 419 | Zahnriemen links |

### Verstelleinheit (Pos. 500)

| | |
|---|---|
| Pos. 501 | Stellschraube |
| 502 | Gelenk |
| 503 | Handgriff |

### Umschaltung (Pos. 600)

| | |
|---|---|
| Pos. 601 | Aku- Motor |
| 602 | Schneckenrad |

### Blindwellegetriebe

Die Erfindung ist eine Verbesserung der Patentanmeldung, *"Tretlagergetriebe"* von 12/93 (gleicher Erfinder).

Um die Belastung von dem Tretlager zu nehmen und es auch maßlich zu verkleinern, kam es zur kontruktiven Umgestaltung.

Es ist Aufgabe der Erfindung, hier eine wesentliche Erleichterung durch Verbesserung des Wirkungsgrades zu schaffen und das Fahren gegen hohen Widerstand zu erleichtern.

Diese Aufgabe wird erfindungsgemäß dadurch gelöst, daß die Kurbelarme getrennt geführt aber schlüssig über ein Tretlagergetriebe so miteinander verbunden sind, daß sich für das rücklaufende Pedal eine größere Winkelgeschwindigkeit ergibt, als für das vorlaufende, kraftbeaufschlagte Pedal.

Durch diese Maßnahme durcheilt nur das rücklaufende Pedal die Todzonen und die mit schlechtem Wirkungsgrad behafteten Sektoren. Das Pedal gelangt somit schnell wieder in die Hauptantriebswinkelzone, und zwar zu einem Zeitpunkt, in der das bisher treibende Pedal gerade diese Hauptantriebwinkelzone verläßt.

Durch diese Eigenschaft wird ein verlustarmer, pausenloser, mit größtmöglichem Drehmoment versehbarer Energiefluß zum treibenden Antriebsrad möglich. Dieser konstante Energiefluß verhindert ein Zurückfallen der Fahrgeschwindigkeit und erspart so dem Fahrer ein zweimaliges, kraftraubendes Beschleunigen während eines Pedalumlaufes.

Ausgehend von der Tatsache, daß das erreichbar möglichst große Drehmoment der Pedale im vorderen Winkelbereich etwa von 30 - 150 Winkelgrad durch annähernd senkrechten Druck umgesetzt werden kann, und daß bei zwei fest miteinander um 180 Winkelgrad versetzten Pedalen dadurch Todwinkelbereiche entstehen, wäre eine Anbringung von drei Pedalen jeweils um 120 Grad versetzt angeordnet nahezu ideal.

Mit dieser theoretischen Lösung würde dann keine Unterbrechnung des Kraftflusses mehr auftreten.

### Beschreibung eines 120 / 240 Winkelgradantriebes

Statt einer Tretlagermuffe, wie es bei hekömmlichen Fahrrädern bekannt ist, hat dieses Tretlager zwei Kurbelarme, die getrennt gelagert sind.

Durch die Antriebskette (Pos. 3) ist das Kettenrad (Pos. 30) mit dem Kettenrad von Antriebshebel (Pos. 4) verbunden.

Durch die Antriebskette (Pos. 2) ist das Kettenrad (Pos. 31) mit dem Kettenrad von Antriebshebel (Pos. 5) verbunden.

Kettenrad (Pos. 30) ist fest verbunden mit Zahrad (Pos. 14).

Kettenrad (Pos. 31) ist fest verbunden mit Zahrad (Pos. 11).

Hauptkettenrad (Pos. 34) ist fest verbunden mit der Blindwelle (Pos. 8) und treibt über die Hauptkette (Pos. 6) die Hinterradnabe an.

Die Hülsenfreiläufe (Pos. 26 und 27) sind so einzustellen, daß das Zahnrad mit der größeren Geschwindigkeit die Blindwelle antreibt.

Es gibt nun folgenden Ablauf:

Antriebshebel (Pos. 5) wird durch Muskelkraft angetrieben. De Antriebshebel (Pos. 5) bewegt sich von Punkt A nach Punkt B, das sind 120 Grad. Bei dieser Bewegung treibt Zahnrad (Pos. 10) das Zahnrad (Pos. 12) an (im Verhältnis 2:1). Zahnrad (Pos. 17) treibt Zahnrad (Pos. 14) an und somit über den Hülsenfreilauf (Pos. 26) die Blindwelle (Pos. 8) und somit über das Hauptkettenrad (Pos. 34) und Hauptkette die Hinterradnabe.

Antriebshebel (Pos. 4) hat sich also um 240 Grad gedreht; von Punkt B nach Punkt A im selben Zeitraum wie Antriebshebel (Pos. 5) sich von Punkt A nach Punkt B gedreht hat.

Jetzt wird Antiebshabel (Pos. 4) durch Muskelkraft angetrieben. Der Antriebshebel (Pos. 4) bewegt sich von Punkt A nach Punkt B, das sind 120 Grad. Bei dieser Bewegung treibt Zahnrad (Pos. 15) das Zahnrad (Pos. 16) an (im Verhältnis von 2:1), Zahnrad (Pos. 13) treibt Zahnrad (Pos. 11) an und somit über den Hülsenfreilauf (Pos. 27) die Blindwelle und somit über das Hauptkettenrad und Hauptkette die Hinterradnabe.

Antriebshebel (Pos. 5) hat sich also um 240 Grad gedreht, Antriebshebel (Pos. 4) nur um 120 Grad im selben Zeitraum.

## Patentansprüche

1. Fahrradantrieb dadurch gekennzeichnet, daß die Antriebshebel mit Achsen in Pendelkugellager aber getrennt im Tretlagergehäuse gelagert sind.

2. dadurch gekennzeichnet, daß die Antriebshebel über eine Stellschraube und beweglischen Lager gehäuse im Winkel zueinander verstellen lassen, so daß sie in Fahrtrichtung nach außen schräg bewegen.

3. dadurch gekennzeichnet, daß die Antriebskraft von zwei Zahnriemen vom Tretlager zur Blindwelle übertragen wird und somit auf die Mitnehmerscheibe.

4. dadurch gekennzeichnet, daß durch einen Aku-Motor mit rechts- und linkslauf über ein Schneckenradgetriebe am Getriebering die Gewinderinge mit rechts- und linksgewinde nach innen und wahlweise nach außen bewegen und somit über die Kopplungsscheiben und die gefederten Kupplungsbolzen das Zahnradgetriebe ein und ausschalten.

5. dadurch gekennzeichnet, daß der Getriebe-Kasten pendelnd gelagert ist und sich über eine Stellschraube verstellen läßt und somit die Pedalstellung im Kraftbereich
